# EUROPEAN PATENT APPLICATION

(11) **EP 1 642 928 A1**
(43) Date of publication of application: **05.04.2006**
(21) Application number: 04747010.9
(22) Date of filing: 05.07.2004
(51) Int. Cl.: C08L 21/00, B60C 1/00, C08K 3/04, C08K 3/36, C08K 5/54

(54) **RUBBER COMPOSITION AND TIRE PRODUCED FROM THE SAME**

(30) Priority: 04.07.2003 JP 2003191680
(71) Applicant: Bridgestone Corporation, Tokyo 104-8340 (JP); Frontier Carbon Corporation, Tokyo 104-0031 (JP)
(72) Inventor: AOKI, Sei, c/o BRIDGEST0NE CORPORATION, Tokyo 104-8340 (JP); KASAI, Tetsuo, c/o Frontier Carbon Corporation, Yokohama-shi, Kanagawa 227-8502 (JP)
(74) Representative: Whalley, Kevin
(86) International application number: PCT/JP2004/009541
(87) International publication number: WO 2005/003227

(57) **Abstract**

A rubber composition having a low specific gravity and a reduced hysteresis loss or loss tangent, and a tire using the rubber composition having low-exothermic property, excellent durability, and rolling resistance are provided.

A rubber composition comprising 100 parts by mass of a rubber component and 0.1 to 10 parts by mass of fullerenes, wherein the fullerenes are produced by a combustion method, and comprise at least one selected from (1) a fullerene having a closed basket structure represented by C₂ₙ (n being an integer of 30 or greater); (2) a soot including fullerenes generated in a process of producing fullerenes obtained by the combustion method; and (3) a residue generated by extraction of fullerenes from the soot; and the tire manufactured by using the rubber composition as a rubber member.

## Description

### TECHNICAL FIELD

The present invention relates to a rubber composition compounded with fullerenes which are useful for applications to various rubber products, and to a tire using the rubber composition as a rubber member.

### DESCRIPTION OF THE RELATED ART

Fullerenes typified by C₆₀ are novel chemical substances that were discovered by H. W. Kroto and R. E. Smalley, et al. in 1985 as carbon compounds in which 60 carbons constitute a sphere-like truncated regular icosahedron that consists of 20 regular hexagons and 12 regular pentagons. These fullerene carbon materials are attracting attention as new carbon substances which are different from conventionally-known graphite, amorphous carbon, and diamond. The reason for this is that fullerenes have unique structures and physical properties which are different from those of conventional carbon substances. For example, fullerenes typified by C₆₀ and C₇₀ constitute molecular structures in which a number of carbon atoms are disposed in the shape of a spherical basket, and yet have the nature of high solubility in an organic solvent such as benzene though they are carbon substances; therefore, they can be easily refined and separated.

Besides C₆₀ and C₇₀, a number of other types of fullerenes are known, and they are known to exhibit the nature as a superconductor or a semiconductor. Further, they have high photofunctional effects, and their application to electrophotographic photosensitive materials and optical devices is under consideration. In addition, it has been revealed that effective physical properties as a functional material are imparted by confining a heterogenous element in the inside or by attaching various chemical functional groups to the outside. Thus, fullerene derivatives which have fullerenes as the basic skeleton in the molecules have been recognized as important substances for controlling the chemical and physical properties of the fullerene and for developing the optical properties, and a variety of fullerene derivatives have been devised.

In addition, the carbon skeleton of a fullerene is a carbon allotrope having a closed three-dimensional hollow spherical shell structure formed by covalent bonds between sp² carbon hybrid orbitals having strain, and the molecular structure is a polyhedron consisting of pentagons and hexagons. By using the fullerene or its derivative including such a special structure in a rubber composition, the possibilities are expected that a novel or strong reinforcing effect is produced, and that it is involved in a new form of crosslinking, and the like, while the specific gravity is lower than those of conventional ones.

The production and applications of fullerenes are disclosed in the following patent documents 1 to 4, and, as a general description, described in detail, for example, in the following non-patent document 1.

As an example in which such a fullerene-type carbon is applied to a rubber composition and tire, the following patent document 5 can be mentioned as an example. In this document, a rubber composition and a tire composed of diene elastomer and at least one type selected from fullerene carbon, carbon black, and precipitated silica are disclosed, with a statement that the specific gravity is low, and the balance between the rolling resistance and the tread abrasion resistance is excellent.

In addition, it is disclosed to use a fullerene or its derivative in a rubber composition for the core of a two-layered solid golf ball (as in the patent document 6, for example), and the golf ball is reported to have an excellent repulsion performance and flying performance, and improved impact feeling.

However, the number of applications to rubber compositions and various rubber products is yet extremely limited, and appropriate application of fullerene-type carbons on the basis of the comprehension of their features is left for the future research.
Patent document 1: The specification of U.S. Patent No. 5,273,729;
Patent document 2: The specification of U.S. Patent No. 5,281,653;
Patent document 3: The specification of U.S. Patent No. 5,292,813;
Patent document 4: The specification of U.S. Patent No. 5,372,798;
Patent document 5: Japanese Patent Application Laid-Open No. 10-168238;
Patent document 6: Japanese Patent Application Laid-Open No. 2002-253703.
Non-Patent document 1: "Scientific American" (October, 1990)

### DISCLOSURE OF THE INVENTION

The present invention has been made in view of the above conventional circumstances, and has an intention to achieve the following purposes.
In other words, the present invention has an object to provide a rubber composition having a low specific gravity which is obtained by using fullerenes within specific ranges of substances and amounts based on the comprehension of the characteristics of fullerenes as novel reinforcing materials or novel functional materials, thereby providing a rubber composition achieving both the suppression of hysteresis loss or loss tangent and the improvement of the mechanical strength or durability, which has been conventionally considered to be difficult.

In addition, a second purpose of the present invention is to provide an excellent tire which is low in running heat generation, and has a long service life with high durability and a low rolling resistance.

### Means for solving the problem

The means of the present invention for solving the problems are as follows:
<1> A rubber composition comprising 100 parts by mass of a rubber component and 0.1 to 10 parts by mass of fullerenes, wherein the fullerenes are those produced by the combustion method, and contain at least one selected from (1) a fullerene having a closed basket structure represented by C₂ₙ (n is an integer of 30 or greater); (2) a soot including fullerenes generated in the process of producing fullerenes that is manufactured by the combustion method; and (3) a residue generated by the extraction of fullerenes from the soot.
<2> The rubber composition of the above-mentioned <1>, further comprising 20 to 70 parts by mass of carbon black.
<3> The rubber composition of the above-mentioned <1> or <2>, wherein the fullerenes contain (2) the soot including fullerenes generated in the process of producing fullerenes that is manufactured by the combustion method; and/or (3) the residue generated by the extraction of fullerenes from the soot.
<4> A tire which uses, as a rubber member, a rubber composition containing 100 parts by mass of a rubber component and 0.1 to 10 parts by mass of fullerenes manufactured by the combustion method, and the fullerenes are at least one selected from (1) a fullerene having a closed basket structure represented by C₂ₙ (n is an integer of 30 or greater); (2) a soot including fullerenes generated in the process of producing fullerenes that is manufactured by the combustion method; and (3) a residue generated by the extraction of fullerenes from the soot.

### Advantageous Effect of the Invention

According to the present invention, a rubber composition having a low specific gravity compounded with specific fullerenes as a novel reinforcing material manufactured by the combustion method, particularly a rubber composition having advantageous physical properties with suppressed hysteresis loss or loss factor (tan δ) and improved mechanical strength or durability can be provided. Further, by applying this rubber composition to rubber members, a tire which is low in heat generation and excellent in rolling resistance can be provided.

### BEST MODE FOR CARRYING OUT THE INVENTION

The rubber composition of the present invention is a rubber composition comprising 100 parts by mass of a rubber component and 0.1 to 10 parts by mass of fullerenes. The rubber composition is characterized by that the fullerenes are those manufactured by the combustion method, and contain at least one selected from (1) a fullerene having a closed basket structure represented by C₂ₙ (n is an integer of 30 or greater); (2) a soot including fullerenes generated in the process of producing fullerenes obtained by the combustion method; and (3) a residue generated by the extraction of fullerenes from the soot.

Further, in a preferable embodiment, the rubber composition of the present invention comprises 20 to 70 parts by mass of carbon black in addition to the above. Thus, by using the fullerenes manufactured by the combustion method as a novel reinforcing material in the above range with respect to the rubber component, the rubber composition of the present invention has a characteristic of low specific gravity, and suppresses the hysteresis loss or loss tangent (tan δ), and has physical properties that are excellent in mechanical strength and durability.

To the above-mentioned rubber composition of the present invention, other reinforcing materials, fillers, process oils, sulfur, vulcanization accelerators, vulcanization assistants, aging inhibitors, oxidation inhibitors, and various other additives may be further added pursuant to the purpose or need.

In addition, the tire of the present invention manufactured by using the above-mentioned rubber composition as a rubber member or a part of a member is a tire which is light and low in heat generation and has a low rolling resistance and excellent durability.

In the following, the rubber composition and tire of the present invention will be described in detail.

### (Fullerenes and manufacturing method thereof)

A fullerene is an allotrope (C₂ₙ) of carbon having a core annulene ring structure or a portion containing a core annulene ring structure, in which n can be an integer in the range of approx. 16 to 960, preferably in the range of approx. 24 to 240, more preferably in the range of approx. 30 to 80, and particularly preferably in the range of approx. 30 to 40. These carbon atoms are disposed at the vertexes of at least 12 pentagons and at least 20 hexagons, forming a carbon atom structure of a closed basket configuration. Such a fullerene or a fullerene carbon characteristically has an extremely low specific gravity in the range of approx. 1.2 to approx. 1.7, owing to the hollow molecular structure.

Economical and efficient mass-production methods for the above-mentioned fullerene, which is attracting attention as a new carbon material, are continuously studied vigorously, and gradually put into practical use.

The fullerenes to be used in the rubber composition of the present invention are fullerenes manufactured by the method which extracts them from the condensate (soot) produced by imperfect combustion of a carbon-containing substance, i.e., the so-called combustion method, and have advantages in manufacturing cost, quality stability, and mass-production supply capacity. The basic manufacturing methods for fullerenes by this combustion method are described in detail in, for example, the specification of U.S. Patent No. 5,273,729, Japanese Patent Application National Publication No. 6-507879, and the like.

Further, in connection to the manufacturing methods for fullerenes by the above-mentioned combustion method, various techniques of selectively controlling the flame conditions and manufacturing parameters (such as carbon source, catalyst, carbon to oxygen ratio, feeding method, feeding rate, heating method, gas velocity, pressure, temperature, residence time, dilution, recovery method, refining method, and the like) for optimizing the fullerene composition and for improving the yield are disclosed in Japanese Patent Application Laid-open No. 5-070115, Japanese Patent Application Laid-open No. 5-116921, Japanese Patent Application Laid-open No. 5-116923, Japanese Patent Application Laid-open No. 5-124807, Japanese Patent Application Laid-open No. 5-193921, Japanese Patent Application Laid-open No. 5-238717, Japanese Patent Application Laid-open No. 5-238718, Japanese Patent Application Laid-open No. 5-238719, Japanese Patent Application Laid-open No. 6-183712, Japanese Patent Application Laid-open No. 6-122513, Japanese Patent Application Laid-open No. 6-056414, Japanese Patent Application Laid-open No. 6-032606, Japanese Patent Application Laid-open No. 6-024721, Japanese Patent Application Laid-open No. 6-024722, Japanese Patent Application Laid-open No. 7-237912, Japanese Patent Application Laid-open No. 7-257916, Japanese Patent Application Laid-open No. 8-067508, Japanese Patent Application Laid-open No. 8-217431, Japanese Patent Application Laid-open No. 8-239210, Japanese Patent Application Laid-open No. 9-309713, Japanese Patent Application Laid-open No. 10-87310, Japanese Patent Application Laid-open No. 11-255794, Japanese Patent Application Laid-open No. 2000-109309, Japanese Patent Application Laid-open No. 2001-158611, Japanese Patent Application Laid-open No. 2002-234713, and the like.

As the fullerenes to be used in the rubber composition of the present invention, the fullerenes manufactured by applying the above-mentioned techniques may also be advantageously used pursuant to the purpose and need.

The fullerenes to be used in the rubber composition of the present invention are those manufactured by the combustion method, and any of (1) a fullerene carbon itself having a closed basket structure represented by C₂ₙ (n is an integer of 30 or greater); (2) a soot including fullerenes generated in the process of producing fullerenes obtained by the combustion method; and (3) a residue generated by the extraction of fullerenes from the soot can be used. In addition, only one type of these fullerenes (1) to (3) may be used, or two or more types mixed in any ratio may be used.

Among the above, from the viewpoint of cost-efficiency, it is particularly preferable to use (2) the soot including fullerenes generated in the process of manufacturing fullerenes obtained by the combustion method; and/or (3) the residue generated by the extraction of fullerenes from the soot.

In addition, the structure of the fullerene carbon obtained itself is not varied depending upon the manufacturing method (e.g., the arc method and the combustion method). However, even when the same raw materials are used, the composition including fullerene carbon obtained is greatly affected by the manufacturing method, and further, the internal structure of the soot including fullerenes generated in the process of manufacturing fullerenes and that of the residue generated by the extraction of fullerenes from the soot is varied by the difference in the manufacturing method.

Especially, the residue generated by the extraction of fullerenes from the soot that is generated in the process of producing fullerenes by the combustion method has a special structure that has conventionally been utterly unknown as a carbon material, the structure having the peak within the range of 10 to 18 degrees which is the strongest peak within the range of diffraction angle of 3 to 30 degrees according to the result of the X-ray diffraction measurement using a CuKα line, but having no peak in the range of diffraction angle of 26 to 27 degrees, and at the same time, having a peak in the G band of 1590±20 cm⁻¹ and a peak in the D band of 1340±40 cm⁻¹ according to the result of the Raman spectrum measurement at an excitation wavelength of 5145 A, and having a peak intensity ratio I(D)/I(G) in the range of 0.4 to 1.0 wherein I(G) and I(D) represent the peak intensities of the respective bands. In other words, the G band is normally the peak originates in the regular graphite structure, and the peak intensity ratio I(D)/I(G) is generally called R value in the carbon science, and is used as an index of the degree of graphitization. That this value is 1 or less means that the graphite structure is developed. However, in the X-ray diffraction measurement, the residue as the present carbon material provides no peak in the range of diffraction angle of 26 to 27 degrees that originates in the layer structure of the graphite, and has a new peak at a diffraction angle of 14 degrees. From these results of the analysis, it is presumed that the present carbon material (the residue) is a novel carbon material having a regular structure which is totally different from the regular structure of graphite.

The present invention has achieved the improvement of the physical properties of the rubber composition by using the fullerenes having such a special structure, and thus, as the fullerenes to be used in the rubber composition of the present invention, those manufactured by the combustion method are more preferably used than those obtained by the arc method or the like, from the viewpoint of the effects.

In the rubber composition of the present invention, 0.1 to 10 parts by mass of the above-mentioned fullerenes are added to 100 parts by mass of a rubber component and used, for the purpose of achieving both the improvement of the hysteresis loss or loss tangent characteristic and the improvement of the strength physical properties and the like. The quantity to be added is preferably 0.3 to 8 parts by mass, and is most preferably 0.5 to 5 parts by mass. If the quantity of the above-mentioned fullerenes to be added is less than 0.1 part by mass, the effect of the improvement of the characteristics of the rubber composition owing to the addition of the fullerenes is insufficient, and if the quantity to be compounded exceeds 10 parts by mass, the effect of the improvement tends to be saturated, and the strength may be rather lowered; thus excessive addition is not preferable.

### (Rubber composition)

The rubber component to be used in the present invention is not particularly limited, and natural rubbers and various synthetic rubbers used in conventional known rubber formulations can be used.

As the natural rubbers, either sheet rubber or block rubber may be used, and all of the RSS#1 to #5 (the categories based on "International Standards of Quality and Packing for Natural Rubber Grades") can be used.

As the synthetic rubbers, various diene synthetic rubbers, diene copolymer rubbers, special rubbers, and modified rubbers, and the like can be used. Specifically, butadiene copolymers such as polybutadiene (BR), copolymers of butadiene and aromatic vinyl compounds (such as SBR and NBR), and copolymers of butadiene and other diene compounds, isoprene polymers such as polyisoprene (IR), copolymers of isoprene and aromatic vinyl compounds, and copolymers of isoprene and other diene compounds, chloroprene rubber (CR), butyl rubber (IIR), halogenated butyl rubber (X-IIR), ethylene-propylene copolymer rubber (EPM), ethylene-propylene-diene copolymer rubber (EPDM), any blend of these, and the like can be mentioned.

In addition, these rubber components may be modified rubbers appropriately containing hetero atoms such as nitrogen, tin, and silicon.

To the rubber composition of the present invention, it is preferable to add carbon black as a reinforcing material or filler in addition to the above-mentioned rubber component and fullerenes. By adding 20 to 70 parts by mass of carbon black to 100 parts by mass of the rubber component, the breaking strength, the abrasion resistance, the modulus of elasticity, and the like can be further improved without deterioration of the hysteresis loss or loss factor. From the viewpoint of sufficiently obtaining the effect of the improvement of the above-mentioned physical properties, the quantity of carbon black to be added is preferably in the range of 30 to 60 parts by mass, and is particularly preferably in the range of 40 to 60 parts by mass.

The carbon black to be added is not particularly limited. Specifically, carbons such as the following can be used: N110 (SAF), N115, N120, N121, N125, N134, N135, S212, N220 (ISAF-HM), N231 (ISAF-LM), N234, N293, N299, S315, N326 (ISAF-LS), N330 (HAF), N335, N339, N343, N347 (HAF-HS), N351, N356, N358, N375, N539, N550 (FEF), N582, N630, N642, N650, N660 (GPF), N683 (APF), N754, N762 (SRF-LM), N765, N772, N774 (SRF-HM), N787, N907, N908, N990 (MT), N991 (MT) carbons, and the like. Here, the designations in the parentheses indicate the conventional common classification names of the carbon blacks.

Among the above-mentioned carbon blacks, from the viewpoint of improving both the hysteresis loss characteristic and the breaking strength upon being used with the above-mentioned fullerenes, N110 (SAF), N220 (ISAF-HM), N231 (ISAF-LM), N326 (ISAF-LS), N330 (HAF), N347 (HAF-HS), N550 (FEF), and N660 (GPF) carbons are preferable, and N330 (HAF) and N347 (HAF-HS) carbons are particularly preferable.

One of the above-mentioned carbon blacks may be used alone or two or more of the carbon blacks may be used in combination.

In addition, to the rubber composition of the present invention, a silica can be added as a reinforcing material or filler. The silica is not particularly limited, and wet silica (hydrous silicate), dry silica (silicic anhydride), calcium silicate, aluminum silicate, and the like can be mentioned as examples. Among these, wet silica is preferable because it provides the most remarkable effects in improving the fracture resistance and in achieving both of wet grip performance and low rolling resistance.

When a silica is used as a filler, it is preferable to use a silane coupling agent at the addition in order to further improve the reinforcing performance. As the silane coupling agent, bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, and the like can be mentioned as examples.

In addition, carbon nanofibers (solid items, hollow items, and the like), aluminas, inorganic fillers such as calcium carbonate and clay, can be used.

In these embodiments, (i) the total quantity of fullerenes, carbon black, and/or silica to be added to 100 parts by mass of the rubber component is preferably 10 to 90 parts by mass, more preferably 20 to 80 parts by mass, and particularly preferably 30 to 60 parts by mass. In addition, (ii) the ratio of fullerenes to carbon black and/or silica is preferably 0.3 to 50% by mass, more preferably 0.5 to 40% by mass, and particularly preferably 1 to 30% by mass.

Further, a vulcanization agent, a vulcanization accelerator, a process oil may be added to the rubber composition of the present invention.

As the vulcanization agent, sulfur, sulfur-containing compounds, and the like can be mentioned. Its addition quantity in terms of sulfur content with respect to 100 parts by weight of the rubber component is preferably 0.1 parts by weight to 10 parts by weight, and more preferably 1 part by weight to 5 parts by weight.

The above-mentioned vulcanization accelerator is not particularly limited. As preferable examples, thiazole-based vulcanization accelerators such as M (2-mercaptobenzothiazole), DM (dibenzothiazyldisulfide), and CZ (N-cyclohexyl-2-benzothiazylsulfeneamide), and guanidine-based vulcanization accelerators such as DPG (diphenylguanizine) can be mentioned. Its usage quantity is determined mainly based on the required rubber vulcanization speed. Generally, it is preferably 0.1 parts by weight to 7 parts by weight with respect to 100 parts by weight or the rubber component, and is more preferably 1 part by weight to 5 parts by weight.

As the above-mentioned process oil, paraffin-based process oils, naphthene-based process oils, aromatic process oils, and the like can be mentioned as examples. Aromatic process oils are used for applications where improvements of the tensile strength and the abrasion resistance are emphasized, while naphthene-based process oils and paraffin-based process oils are used for applications where improvements of the hysteresis characteristic and the low temperature characteristic are emphasized. Its quantity to be used is preferably 0 parts by weight to 100 parts by weight with respect to 100 parts by weight of the rubber component. If it exceeds 100 parts by weight, the tensile strength and low-exothermic property of the vulcanized rubber tend to be deteriorated.

Besides these, additives commonly used in the rubber industry, such as anti-aging agents, zinc oxide, stearic acid, antioxidants, and antiozonants may be added to the rubber composition of the present invention as appropriate.

The rubber composition of the present invention can be obtained by carrying out kneading with a kneading machine such as an open-type kneader (e.g. a roll) or a closed-type kneader (e.g. a Banbury mixer); vulcanization is conducted after molding, and the composition can be applied to various rubber products. For example, it can be used for tire applications such as tire treads, under treads, carcass, side walls, and bead portions, and for applications such as vibration absorbing rubbers, fenders, vibration isolating rubbers, belts, hoses, and other industrial products. The rubber composition of the present invention can be advantageously used particularly as rubbers for tire treads, under treads, and side walls.

As described above, the rubber composition of the present invention is advantageously used as a rubber member such as a tire tread, an under tread, a side wall, and the pneumatic tire of the present invention that uses such a rubber member can acquire excellent performance in breaking strength, wet skid resistance, dry skid resistance (dry gripping performance), abrasion resistance, fuel consumption reduction, and the like. As the gas to be introduced to the tire, air and inert gases such as nitrogen can be mentioned.

### EXAMPLES

Hereinbelow, examples of the rubber composition of the present invention will be specifically described. However, the present invention is not limited to these Examples. In Examples, "part" and "%" mean "part by mass" and "% by mass", respectively.

### [Examples 1 to 9 and Comparative Example 1]

On the basis of the formulation as given in the upper section of the following Table 1, ordinary procedure was taken to knead the mixture, using a labo prastomill of 500 mL, so that sheets of the respective rubber compositions of Examples 1 to 9 and Comparative Example 1 were prepared. Then, at a temperature of 150 °C, vulcanization was conducted for a vulcanization time period that was 1.5 times the period of time the increase in torque caused by the vulcanization reaction took to reach 90% of the total, whereby the following samples for physical property measurement were obtained.

The fullerenes which were used in the Examples were as follows:
- Fullerene (soot) ..... Soot containing fullerene carbon. An apparatus in which a premixing-type water-cooled burner is installed in a reduced-pressure chamber was used, and the raw material (benzene) and oxygen were premixed and fed to the burner to form a stable laminar flame while the inside of the system was evacuated with a vacuum pump. Combustion proceeded under the conditions of a C/O ratio of 0.995, a combustion chamber pressure of 20 torr, a gas flow rate of 49 cm/sec, and a diluted argon concentration of 10 mol percent. The soot generated was sampled from the top and wall surface of the combustion chamber.
- Fullerene (carbon) ..... To the soot generated in the above-mentioned combustion, 15 times as much 1,2,4-trimethylbenzene (TMB) was added, followed by stirring, extraction, and filtration. Further, cleaning and filtration with TMB were repeated three times, followed by vacuum concentration, precipitation by addition of isopropyl alcohol (IPA), and, after filtration, reduced-pressure drying. The fullerene carbon obtained had a composition in which C₆₀ occupied 63% by mass and C₇₀ occupied 22% by mass.
- Fullerene (residue) ..... The residue after the extraction of the fullerene carbon; the residue was obtained by drying the solid content in the filtrate left after the extraction and removal of the above-mentioned fullerene carbon, the drying being conducted under reduced pressure all day and night at a temperature of 100 °C and then at 190 °C. In the measurement results of the X-ray diffraction of this residue using a CuKα line, there was the peak at 14 degrees which was the strongest peak in the range of diffraction angle of 3 to 30 degrees while there was no peak in the range of diffraction angle of 26 to 27 degrees. At the same time, in the result of the measurement of the Raman spectrum at an excitation wavelength of 5145 A, there were peaks in the G band of 1590±20 cm⁻¹ and in the D band of 1340±40 cm⁻¹. When the peak intensities of the respective bands are represented by I(G) and I(D), the peak intensity ratio I(D)/I(G) was 0.63.

Further, the specifications of the ingredients shown in Table 1 were as follows:
- SBR1500: Styrene-butadiene copolymer manufactured by JSR Corporation
- Carbon black (HAF); "ASAHI #70" manufactured by Asahi Carbon Company
- Process oil; Spindle oil
- "NOCRACK 6C"; N-(1,3-dimethylbutyl)-N'-phenyl-p-phenylenediamine, an anti-aging agent manufactured by OuchiShinko Chemical Industrial Co., Ltd.
- "NOCCELER NS"; N-t-butyl-2-benzothiazylsulfenamide, a vulcanization accelerator manufactured by OuchiShinko Chemical Industrial Co., Ltd.

For the above-mentioned respective vulcanized rubber samples, the following evaluation tests were carried out, and the results are given in the lower section of Table 1.

### (I) Tensile test

At a room temperature of 25 °C, a tensile test in conformity with JIS K6301-1995 (No. 3 test piece sample) was conducted to measure the modulus at 300% elongation M₃₀₀ (MPa), the breaking strength Tb (MPa), and the breaking extension (%) Eb.

### (II) Dynamic viscoelasticity test

Using a dynamic viscoelasticity measuring tester "ARES" manufactured by Rheometrics Inc., the storage modulus G' (MPa) and the loss tangent (tan δ) were measured at a temperature of 50 °C, a measuring frequency of 15 Hz, and a dynamic strain of 1%.

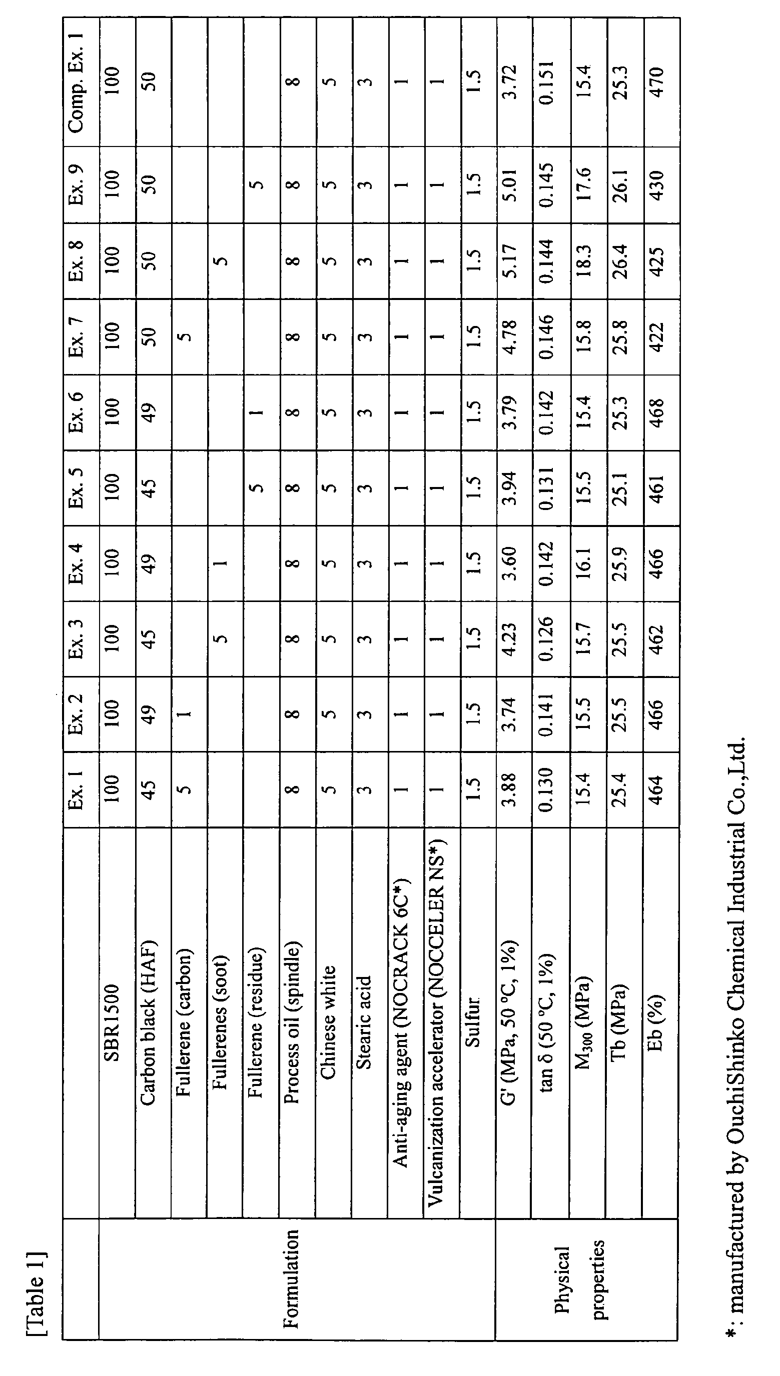

From the results given in Table 1 above, it was found that the values of storage modulus (G') in Examples 1 to 9 in which fullerenes were added in accordance with the range of the present invention were approximately equivalent to or higher than the value in Comparative Example 1, and that the values of loss tangent (tan δ) in Examples 1 to 9 were fairly lower than the value in Comparative Example 1. In addition, the values of 300% modulus (M₃₀₀) were equivalent to or higher than the value in Comparative Example 1, and those of breaking strength (Tb) were approximately equivalent to or higher than the value in Comparative Example 1. From these facts, it can be seen that the rubber composition of the present invention has balanced loss tangent (tan δ) characteristic and strength physical properties.

## Claims

1. A rubber composition comprising 100 parts by mass of a rubber component and 0.1 to 10 parts by mass of fullerenes, wherein
the fullerenes are produced by a combustion method, and comprise at least one selected from (1) a fullerene having a closed basket structure represented by C₂ₙ (n being an integer of 30 or greater); (2) a soot including fullerenes generated in a process of producing fullerenes obtained by the combustion method; and (3) a residue generated by extraction of fullerenes from the soot.

2. The rubber composition of claim 1, further comprising 20 to 70 parts by mass of carbon black.

3. The rubber composition of claim 1, wherein the fullerenes comprise (2) the soot including fullerenes generated in a process of producing fullerenes obtained by the combustion method; and (3) the residue generated by extraction of fullerenes from the soot.

4. The rubber composition of claim 2, wherein the fullerenes comprise (2) the soot including fullerenes generated in a process of producing fullerenes obtained by the combustion method; and (3) the residue generated by extraction of fullerenes from the soot.

5. The rubber composition of claim 2, wherein 0.3 to 8 parts by mass of the fullerenes are compounded with 100 parts by mass of the rubber component.

6. The rubber composition of claim 2, further comprising wet silica and a silane coupling agent.

7. The rubber composition of claim 6, wherein a total quantity of the fullerenes, the carbon black, and/or the silica is from 10 to 90 parts by mass with respect to 100 parts by mass of the rubber component.

8. The rubber composition of claim 6, wherein a proportion of the fullerenes to the carbon black and/or the silica is 0.3 to 50% by mass.

9. A tire which is formed by using, as a rubber member, a rubber composition comprising 100 parts by mass of a rubber component and 0.1 to 10 parts by mass of fullerenes manufactured by a combustion method, wherein the fullerenes include at least one selected from (1) a fullerene having a closed basket structure represented by C₂ₙ (n being an integer of 30 or greater); (2) a soot including fullerenes generated in a process of producing fullerenes obtained by the combustion method; and (3) the residue generated by extraction of fullerenes from the soot.

10. The tire of claim 9, wherein the rubber member is one or more members selected from a tire tread, an under tread, and a side wall.
